Europäisches Patentamt

European Patent Office

Office européen des brevets

(19)

(11) Veröffentlichungsnummer: **0 388 759**
**A1**

(12) **EUROPÄISCHE PATENTANMELDUNG**

(21) Anmeldenummer: **90104703.5**

(22) Anmeldetag: **13.03.90**

(51) Int. Cl.5: **C09D 5/44, C25D 13/22**

(30) Priorität: **17.03.89 DE 3908875**

(43) Veröffentlichungstag der Anmeldung:
**26.09.90 Patentblatt 90/39**

(84) Benannte Vertragsstaaten:
**AT DE ES FR GB IT SE**

(71) Anmelder: **Herberts Gesellschaft mit beschränkter Haftung**
**Christbusch 25**
**D-5600 Wuppertal 2(DE)**

(72) Erfinder: **Kann, Wolfgang, Dr.**
**Alt Bossel 1**
**D-4322 Sprockhövel 1(DE)**
Erfinder: **Saatweber, Dietrich, Dr.**
**Forststrasse 22**
**D-5600 Wuppertal 21(DE)**

(74) Vertreter: **Türk, Gille, Hrabal**
**Brucknerstrasse 20**
**D-4000 Düsseldorf 13(DE)**

(54) **Verfahren zur Herstellung einer wässrigen Bindemittelzusammensetzung, die erhaltene Bindemittelzusammensetzung und deren Verwendung zur Herstellung von Elektrotauchlack-überzugsmitteln.**

(57)

2.1. Wäßrige Bindemittelzusammensetzungen für Elektrotauchlack-Überzugsmittel wiesen bisher einen sehr hohen Neutralisationsgrad auf. Es sollen wäßrige Bindemittelzusammensetzungen bereitgestellt werden, die einen verringerten Neutralisationsgrad haben, stabil sind und zu porenfreien Überzügen bei gutem Umgriff führen.

2.2. Beim Verfahren zur Herstellung einer wäßrigen Bindemittelzusammensetzung werden die filmbildenden Harze oder deren Lösungen in organischen Lösemitteln mit der zur Auflösung oder Dispergierung benötigten Neutralisationsmittelmenge versehen, worauf das neutralisierte Produkt in Wasser aufgelöst und dispergiert wird und anschließend eine Ultrafiltration, Dialyse oder umgekehrte Osmose durchgeführt wird, bis ein Teil des Neutralisationsmittels wieder entfernt ist.

2.3. Bereitstellung von Elektrotauchlack-Überzugsmitteln mit geringem Neutralisationsmittelgehalt.

EP 0 388 759 A1

## Verfahren zur Herstellung einer wäßrigen Bindemittelzusammensetzung, die erhaltene Bindemittelzusammensetzung und deren Verwendung zur Herstellung von Elektrotauchlack-Überzugsmitteln

Die Erfindung betrifft ein Verfahren zur Herstellung einer wäßrigen Bindemittelzusammensetzung für Elektrotauchlack-Überzugsmittel, durch Neutralisation eines oder mehrerer filmbildender Harze mit sauren oder basischen Gruppen, gegebenenfalls in Anwesenheit eines Vernetzers, mit einer Base oder Säure als Neutralisationmittel und Vermischen mit Wasser. Sie betrifft auch die dabei erhaltene Bindemittelzusammensetzung mit einem geringen Gehalt an Neutralisationsmittel sowie die Verwendung dieser Bindemittelzusammensetzung für Elektrotauchlack-Überzugsmittel.

Das Prinzip der Elektrotauchlackierung (ETL) ist in der Literatur beschrieben und hat sich in der Praxis durchgesetzt. Es besteht darin, daß ein Werkstück mit elektrisch leitender Oberfläche aus Metall oder elektrisch leitendem Kunststoff oder mit einem elektrisch leitenden Lackfilm in ein wäßriges Elektrotauchbad gebracht wird, als Anode oder als Kathode an eine Gleichstromquelle angeschlossen wird und dann durch den fließenden Strom der Lack auf der Oberfläche koaguliert und ausfällt. (Metalloberfläche 31 (1977) 10, S. 455-459 / EP-B-66 859 / EP-A-4 090).

Das Elektrotauchbad besteht aus einer wäßrigen Dispersion, z. B. Suspension oder Emulsion oder aus einer wäßrigen Lösung von einem oder mehreren Bindemitteln, die teilweise durch Salzbildung mit organischen oder anorganischen Neutralisationsmitteln wasserdispergierbar bzw. wasserlöslich gemacht wurden, aus darin dispergierten Pigmenten, Füllstoffen, Additiven, gelösten oder dispergierten Lösemitteln und sonstigen Hilfsmitteln. Zur Abscheidung wird an die Werkstücke eine Spannung von 50 - 500 V angelegt, die durch den Stromfluß durch das Beschichtungsbecken eine feste Koagulation des Lacks auf allen Seiten des Werkstückes bewirkt.

Die üblichen Elektrotauchbäder werden kontinuierlich betrieben, d. h. in ein mit dem Beschichtungsmittel gefülltes Becken werden die verschiedenen Substrate getaucht und beschichtet. Dadurch wird dem Bad Festkörper entzogen. Um das Beschichtungsverhalten konstant zu halten, wird dann je nach Bedarf dem Becken Nachfüllmaterial in konzentrierter Form (mit erhöhtem Feststoffanteil) zugesetzt und gut dispergiert. Bei diesem Verfahren reichern sich im Bad alle Komponenten an, die sich nicht an der Elektrode abscheiden. Das sind besonders die wasserlöslichen niedermolekularen Harzbestandteile und ionische Salze und sonstige lösliche Verunreinigungen, die im Bad entstehen oder eingeschleppt werden. Diese beeinflussen das Beschichtungsverhalten negativ und müssen regelmäßig aus dem System entfernt werden .

Deshalb werden Elektrotauchanlagen bereits mit Ultrafiltrationseinrichtungen oder Dialyseeinrichtungen für die vorhandenen Elektrotauchbäder versehen (DE-A-20 16 627 und Electrocoat / 71, April 1971). Diese Einrichtungen dienen einerseits zum Entfernen von störenden Badbestandteilen aus den verbrauchten wäßrigen Lacken, sowie andererseits zur Aufkonzentration, wobei das entstehende Ultrafiltratwasser noch für weitere Aufgaben, z. B. als Spülwassser im Prozeß der Lackierung (DE-C-21 58 668) eingesetzt werden kann.

Bei der Ultrafiltration handelt es sich um ein Verfahren, bei dem unter Druck eine Lösung oder Dispersion, z. B. eine Suspension, an einer semipermeablen Membran vorbeigepreßt wird. Dabei werden die hochmolekularen Anteile zurückgehalten, während Wasser, Lösungsmittel, gelöste Salze, und andere gut lösliche niedermolekulare Bestandteile teilweise durch die Membran gepreßt und abgetrennt werden. Die Dialyse arbeitet im allgemeinen drucklos und nur über den Ausgleich des durch unterschiedliche Stoffmengen hervorgerufenen sogenannten osmotischen Drucks. Es wird eine semipermeable Membran auf der einen Seite von dem Substrat angespült und auf der Gegenseite mit einem anderen Medium, das die zu entfernenden Substanzen gut aufnehmen kann.

Bei den Bindemitteln ist es üblich, daß diese entweder direkt Ladungen tragende Gruppen aufweisen, z. B. quartäre Ammoniumsalzgruppen, oder aber zumindest teilweise Gruppierungen tragen, die durch Neutralisation in Ionen, z. B. in Salze überführt werden, wodurch dann die Bindemittel gut in Wasser löslich oder dispergierbar werden. Eine erhöhte Anzahl der ionischen Gruppen bewirkt dabei eine leichtere und bessere Überführung in der Wasserphase. Unterhalb einer Mindestneutralisation, die abhängig vom Bindemitteltyp durch Experiment zu bestimmen ist, kann eine Überführung in die Wasserphase nicht erzielt werden.

Es ist aber bekannt, daß der Neutralisationsgrad eines ETL-Bades einen starken Einfluß auf die Beschichtungsbedingungen hat. So wird mit steigender Neutralisation die Stabilität des Bades höher, andererseits verschlechtert sich der Umgriff. Ebenso wird die benötigte Ladungsmenge zum Abscheiden eines bestimmten Lackvolumens erhöht (hohes Abscheideäquivalent Coulomb/g). Ein weiterer negativer Effekt eines hohen Neutralisationsgrades ist, daß beim Abscheiden eine verstärkte Gasbildung zu beobach-

EP 0 388 759 A1

ten ist, die einen porigen Überzugs-Film verursacht. Außerdem sinkt mit einer erhöhten Säuremenge der pH-Wert des Bades und damit auch dessen Korrosivität.

Aufgabe der Erfindung ist daher die Bereitstellung von wäßrigen Bindemittelzusammensetzungen, die stabil sind und dennoch einen niedrigen Neutralisationsgrad aufweisen, und bei Verwendung in Überzugsmitteln porenfreie Überzüge bei gutem Umgriff ergeben.

Überraschenderweise hat sich im Rahmen der Erfindung gezeigt, daß der Neutralisationsgrad einer wäßrigen Bindemittelzusammensetzung nach der Überführung in die Wasserphase auf einen Wert verringert werden kann, der unter dem zur Überführung in die Wasserphase bzw. durch Dispersion oder Auflösung benötigten Neutralisationsgrad liegt. So können beispielsweise bis zu 90 % des zur Auflösung oder Dispergierung notwendigen Neutralisationsmittel durch Ultrafiltration, Dialyse oder umgekehrte Osmose wieder entfernt werden und es wird trotzdem eine stabile Harzdispersion erhalten.

Die vorstehende Aufgabe wird daher durch eine Verfahren des eingangs definierten Gattungsbegriffs gelöst, das dadurch gekennzeichnet ist, daß das Neutralisationsmittel in der zur Auflösung oder Dispergierung in Wasser erforderlichen Menge zu den Harzen oder deren Lösung in organischen Lösemitteln zugesetzt wird, daß erhaltene neutralisierte Produkt in Wasser auflöst oder dispergiert wird und anschließend eine Ultrafiltration, Dialyse oder umgekehrte Osmose des erhaltenen wäßrigen Systems durchgeführt wird, bis ein Teil des Neutralisationsmittels entfernt ist.

Die zur Auflösung oder Dispergierung eines Harzes in Wasser erforderliche Menge an Neutralisationsmittel hängt jeweils von dem spezifischen eingesetzten Harz ab. Sie wird vom Fachmann leicht empirisch ermittelt. Diese Menge kann 100 % oder mehr der zu neutralisierenden Gruppen (beispielsweise Aminooder Carboxylgruppen) betragen. Sie kann jedoch auch erheblich unter dieser Menge liegen.

Beim erfindungsgemäßen Verfahren wird so gearbeitet, daß zunächst das in Wasser aufzulösende oder zu dispergierende Harz, das neutralisierbare Gruppen enthält, entweder als solches oder in organischem Lösemittel mit der zur Neutralisation erforderlichen Menge an Neutralisationsmittel versetzt wird und anschließend die Auflösung oder Dispergierung in Wasser erfolgt. Dann wird eine Ultrafiltration, Dialyse oder umgekehrte Osmose solange durchgeführt, bis 5 bis 90 Gew-%, bevorzugt 10 bis 40 Gew-% des zur Auflösung oder zum Dispergieren benötigten Neutralisationsmittels entfernt sind.

Die der Ultrafiltrations-, Dialyse- oder umgekehrten Osmose-Behandlung zu unterziehende Dispersion (Emulsion, Suspension) oder Lösung wird mit einer derartigen Wassermenge bereitet, daß sie auch nach dem Entzug des Ultrafiltrats, Dialysats oder nach der umgekehrten Osmose stabil und dünnviskos ist. Dieser Festkörpergehalt liegt je nach dem verwendeten Bindemitteltyp oder der verwendeteten Bindemittelmischung beispielsweise bei einem Festkörpergehalt von 10 bis 50 Gew-%, vorzugsweise 10 bis 45 Gew-% und bevorzugt bei 20 bis 40 Gew-%.

Die Trennwirkung der verwendeten Membranen kann über die Porengröße beeinflußt werden. Sie wird beispielsweise so gewählt, daß die in Mizellen oder gelöst vorliegenden Harzanteile nicht passieren können. Diese Ausschlußgröße kann durch einfache Versuche bestimmt werden.

Die Ultrafiltration kann beispielsweise mit Vorrichtungen durchgeführt werden, wie sie in der US-PS 3 495 496 oder Electrocoat / 88, Oktober 1988, 14-1 bis 14-10 beschrieben werden. Das zu behandelnde neutralisierte Medium wird mit Druck an eine poröse Membran gepreßt. Diese kann von einem Trägermaterial gestützt werden, durch das die entstehende Lösung gesammelt wird und dann abfließt. Die Anordnung der Membran kann z. B. in Platten erfolgen oder auch in Bündeln von dünnen Röhren. Es sind übliche Ultrafiltrationssysteme geeignet, die dem Fachmann geläufig sind. Es ist günstig, auf eine ausreichende Oberfläche zu achten. Auch sollte dafür Sorge getragen werden, daß sich möglichst keine Ablagerungen des Bindemittelmaterials an der Membran bilden können. Selbstverständlich wird eine Membran gewählt, die gegen die vorhandenen Neutralisationsmittel, Säuren oder Basen oder gegen die vorhandenen Lösemittel stabil ist. Die Porengröße der Membran kann durch das Herstellungsverfahren oder das Material beeinflußt werden. Sie sind häufig durch Eichen an definierten Molekülen bestimmt. Die für die jeweilige Trennaufgabe geeignete Membran kann beispielsweise durch einfache Versuche bestimmt werden. Auch die Dialyse kann in üblichen Dialysevorrichtungen durchgeführt werden. Die Dialyse arbeitet im allgemeinen drucklos über den Ausgleich des durch unterschiedliche Stoffmengen hervorgerufenen osmotischen Drucks. Es wird eine semipermeable Membran auf der einen Seite von dem neutralisierten Substrat angespült und auf der Gegenseite mit einem anderen Medium (Dialysemedium), das das zu entfernende Neutralisationsmittel und übrige zu entfernende Substanzen aufnehmen kann. Durch Wahl des Dialysemediums oder von Bestandteilen davon ist es möglich bestimmte Moleküle bevorzugt aus der Substratlösung zu entfernen. So können Additive, die die Poren der Membran nicht passieren, wie z. B. makromolekulare Komplexbildner oder Ionenaustauscher, Teile der Verunreinigungen, z. B. Ionen, die durch die Membran wandern, selektiv binden und aus dem Austauschgleichgewicht entfernen. Ebenso ist es möglich dem Dialysemedium Substanzen zuzusetzen, die durch die Membran gezielt in den Lack gelangen. Als bevorzugtes Medium ist

3

jedoch vollentsalztes Wasser geeignet. Durch den Konzentrationsgradienten der gelösten Substanzen werden diese zwischen den Phasen ausgetauscht, soweit sie aufgrund ihrer Größe die Poren der Membran passieren können. Bei dem Verfahren der Dialyse ist es günstig, wenn immer ein möglichst großer Konzentrationsgradient vorliegt. Damit wird der Gleichgewichtszustand möglichst stark verändert, so daß sich der Konzentrationsausgleich rasch vollzieht. Das Verfahren kann statisch betrieben werden, d. h. die zwei durch die Membran getrennten Flüssigkeiten liegen in festen Volumina vor und nur innerhalb der einzelnen Phasen ist eine Durchmischung sichergestellt. Nach Einstellen des Gleichgewichts kann gegebenenfalls die Dialysatphase verworfen werden und das Verfahren wiederholt werden. Bevorzugt ist jedoch ein Verfahren nach dem Gegenstromprinzip, d. h. die beiden Flüssigkeiten fließen im Gegensinn an den zwei Seiten der Membran vorbei. Dabei ist jeweils ein optimaler Konzentrationgradient vorhanden und der Austauschvorgang findet möglichst rasch statt.

Die umgekehrte Osmose kann durchgeführt werden, wie sie von L.E. Applegate, Modern Paint And Coatings, Juli 1984, Seite 23 ff beschrieben wird. Sie beruht auf einem ähnlichen Prinzip und unterscheidet sich wesentlich durch die Trenngröße der Membran. Sie wird beim erfindungsgemäßen Verfahren besonders günstig dann eingesetzt, wenn die abzutrennenden Bestandteile in Wasser löslich und von geringem Molekulargewicht sind.

Die erfindungsgemäßen wäßrigen Bindemittelzusammensetzungen können solche für die anodische Tauchlackierung (ATL) sein, d. h. sie sind an der Anode elektrisch abscheidbar. Es kann sich jedoch auch um solche für die kathodische Tauchlackierung (KTL) handeln , d. h. sie können an der Kathode elektrisch abscheidbar sein. Geeignet sind sämtliche üblichen Bindemittel für ATL und KTL, die durch Neutralisation in wäßrige Phase durch Auflösung oder Dispersion überführbar sind. Es handelt sich um übliche ATL-, bzw. KTL-Überzugsmittel.

Die Bindemittel für ATL enthalten saure Basisharze, deren Säurezahl z. B. bei 35 bis 300 liegen, und deren zahlenmittlere Molmase bei 300 bis 10 000 g/mol liegen kann. Als Säuregruppen treten z. B. $-PO_3H$, $-SO_3H$ und/oder bevorzugt -COOH auf. Als Neutralisationsmittel werden basische Verbindungen eingesetzt, z. B. primäre, sekundäre oder tertiäre Amine mit aliphatischen und/oder aromatischen Resten sowie Ammoniak.

Basisharze sind beispielsweise Reaktionsprodukte aus Maleinsäureanhydrid mit trocknenden und halbtrocknenden fetten Ölen und mit synthetischen Ölen wie Polybutandienöl, sowie Polyesterharze, Epoxidharzester, Polyurethanharze und Poly-(meth-)arcylatharze. Die Basisharze können selbst- oder fremdvernetzend sein. Als Vernetzungsmittel können z. B. Trazinharze, Phenolharze, und/oder blockierte Isocyanate eingesetzt werden. Bindemittel dieses Typs werden umfangreich in der Literatur, z. B. in der DE-A-28 24 418 beschrieben.

KTL-Überzugsmittel enthalten basische Basisharze, deren Aminzahlen z. B. bei 20 bis 250 liegen, und deren zahlenmittlere Molmasse bei 300 bis 10 000 g/mol liegen kann. Als basische Gruppen treten z. B. $-NH_2$, -NRH, $-NR_2$, $\pm NR_3$, $\pm SR_2$, $\pm PR_3$ auf. Bevorzugt sind Stickstoff enthaltende basische Gruppen. Als Neutralisationsmittel, die in den wäßrigen Bindemittellösungen als Anionen fungieren, können die theoretisch bekannten und in der Praxis eingesetzten anorganischen und/oder organischen Säuren eingesetzt werden. In der Praxis werden hauptsächlich einwertige Säuren eingesetzt, die eine gute Löslichkeit des Bindemittels bei möglichst niedrigem Molverhältnis (Säure- zu Base-gruppen) bewirken. Bevorzugt werden Ameisensäure, Essigsäure, Propionsäure, Milchsäure und Alkylphosphorsäure eingesetzt.

Basisharze sind z. B. Aminoepoxidharze, Aminoepoxidharze mit endständigen Doppelbindungen, Aminopolyurethanharze, Mannichbasen auf Basis Bisphenol A, reaktivem Amin und Formaldehyd, Polyester, aminogruppenhaltige Polybutadienharze und modifizierte Epoxid-Kohlendioxid-Amin-Umsetzungsprodukte. Die Basisharze können selbst- oder fremdvernetzend sein. Als Vernetzungsmittel eignen sich beispielsweise Triazinharze, blockierte Isocyanate, umesterungsfähige oder umamidierungsfähige Vernetzer, Vernetzer mit endständigen Doppelbindungen und zur Michael-Addition mit aktivierten Doppelbindungen fähige Vernetzer mit aktivem Wasserstoff. Basisharze für die kathodische Abscheidung werden in der Literatur, z. B. in den Patenten EP-A1-12 463, EP-A 82 291 oder EP-A- 234 395 beschrieben.

Die Herstellung von wäßrigen Lösungen oder Emulsionen oder Dispersionen oder Suspensionen solcher Bindemittel ist bekannt und erfolgt in üblicher Weise. Sie kann erfolgen durch Neutralisieren des Bindemittels oder der Bindemittelmischung oder einer Bindemittellösung mit einer ausreichenden Menge Säure oder Base, z. B. Amin, worauf in Wasser dispergiert wird oder wozu danach Wasser zugefügt wird. Gegebenenfalls können zu dieser Mischung schon weitere Hilfstoffe zugegeben werden. Diese Lösung oder Dispersion wird dann mit Wasser so weit verdünnt, daß sie dünnviskos ist. Sie wird dann erfindungsgemäß der Dialyse oder/und der Ultrafiltration unterworfen und danach gegebenenfalls mit weiteren Additiven versetzt. Der Festkörpergehalt der Emulsion oder Dispersion kann zu diesem Zeitpunkt noch eingestellt werden. Er wird zweckmäßig so gewählt, daß eine dünnflüssige, stabile, nicht nachdickende Lösung erhalten wird.

Aus den so erhaltenen Dispersionen können dann mit den üblichen Pigmenten, Füllstoffen, Lösungsmitteln und Hilfsstoffen, wie Verlaufsmitteln, Antikratermitteln, Antischaummitteln in an sich bekannter Weise ATL-, und KTL-Bäder hergestellt werden. Die Zugabe der Pigmente kann z. B. so erfolgen, daß in einem besonders für die Vermahlung geeigneten Bindemittel und/oder einem der Lackharze die Pigmente und Additive gelöst oder gemischt werden, die Paste neutralisiert wird und danach mit einer dafür geeigneten Perlmühle auf die notwendige Korngröße vermahlen wird. Diese Paste kann dann dem Bindemittelklarlack zugesetzt werden.

Die beiden Komponenten (Paste und Dispersion) des Bades können getrennt zum Anwender gebracht werden, der dann in seiner Beschichtungsanlage die beiden Teilkomponenten in entsprechenden Mengen zusammenmischt. Die elektrisch leitenden Substrate werden dann in die Beschichtungsbäder getaucht und nach den bekannten Methoden beschichtet und anschließend in üblicher Weise, z. B. durch Einbrennen vernetzt.

Im Rahmen der Erfindung hat es sich gezeigt, daß durch die erfindungegemäße Verfahrensweise wäßrige Bindemittelzusammensetzungen erhalten werden können, die einen besonders niedrigen Neutralisationsgrad aufweisen und dennoch stabil sind.

Die Stabilität zeigt sich beispielsweise in einer geringen Sedimentationsneigung über längere Zeit. Die entstandenen Bindemittel sind beispielsweise als Klarlacke gegen Alterung auch bei erhöhten Temperaturen (40°C) mit und ohne Umwälzung unempfindlich und koagulieren nur wenig. Aus diesen wäßrigen Bindemittelsystemen können dann, wie vorstehend erwähnt, unter Zusatz von Pigmenten und weiteren Hilfsmitteln komplette Lacksysteme formuliert werden. Auch diese zeigen eine gute Badstabilität und zusätzlich verbesserte Beschichtungseigenschaften.

Die vorliegende Erfindung betrifft daher neben dem Verfahren zur Herstellung der wäßrigen Bindemittelzusammensetzungen auch die so erhaltenen Bindemittelzusammensetzungen, die einen geringen Neutralisationsgrad aufweisen, bzw. deren Gehalt an Neutralisationsmittel unter dem zur Auflösung bzw. Dispersion in wäßrigem Medium benötigten Gehalt liegt. Die Erfindung betrifft auch Elektrotauchlack-Überzugsmittel, die, wie vorstehend aufgezeigt, aus den erhaltenen wäßrigen Bindemittelzusammensetzungen hergestellt werden können.

Ein Vorteil der erfindungsgemäß erhaltenen kathodisch abscheidbaren Lacke liegt besonders in einem günstigen Spannungsverhalten des Lacks und damit in einem verbesserten Umgriff. Bei anodisch abscheidbaren Harzen ist insbesondere eine bessere und stabilere Schichtstärke mit verringerter Störungsneigung zu bemerken.

Ein weiterer Vorteil der erfindungsgemäßen Bindemittelzusammensetzungen bzw. Überzugsmittel liegt in der Menge und Behandlung der entstehenden Abwässer. Während üblicherweise bei dem Anwender ein Teil des Ultrafiltrats verworfen werden muß und damit die gelösten Stoffe in das Abwasser gelangen, ist es durch die vorliegende Erfindung möglich, Ultrafiltrat und Dialysewasser zentral beim Hersteller zu sammeln. Über bekannte Verfahren, wie beispielsweise die umgekehrte Osmose, können diese dann beim Hersteller aufkonzentriert werden und so in ihrer Menge verringert werden. Damit tritt eine deutliche Entlastung der Umwelt auf.

Bei der erfindungsgemäßen Behandlung werden auch weitere ionische oder nichtionische Verunreinigungen neben den Neutralisationsmitteln entfernt, die bei der Herstellung der Bindemittel unvermeidbar sind und im Beschichtungsbad negative Einflüsse haben können. Ein Maß für die Menge der gelösten dissoziierten Salze ist in der Leitfähigkeit der Bindemitteldispersion zu sehen. Diese hat auch auf verschiedene Abscheideparameter einen Einfluß. Durch die vorliegende Erfindung wird es somit auch möglich, die bisherigen Ultrafiltrations- bzw. Dialysevorgänge der verbrauchten Bäder beim Anwender, d. h. beim Elektrotauch-Lackierer, auf eine Mindestmaß herabzusetzen.

Werden die erfindungsgemäßen Bindemittelzusammensetzungen beim Anwender dem ETL-Beschichtungsbad als Nachfüllmaterial zugesetzt, so wird deutlich weniger Säure oder Base zugesetzt als dies bisher notwendig war. Damit wird der Neutralisationsgrad im Gesamtbad niedrig gehalten, wodurch sich alle weiteren Vorteile für die Beschichtungsparameter ergeben. Außerdem werden auch Verunreinigungen in den ETL-Bädern verringert, die häufig aufgrund ihres geringen Molekulargewichts nicht abgeschieden und aus dem Bad ausgetragen werden und dann in das Ultrafiltrat bzw. Dialysat wandern. Damit wird die Notwendigkeit eines häufigen Verwerfens von Ultrafiltrat deutlich vermindert.

Ein weiterer Vorteil der Ultrafiltration, Dialyse oder umgekehrten Osmose gemäß der Erfindung liegt in dem Entziehen von in Wasser mehr oder weniger löslichen Restlösemitteln aus der Bindemitteldispersion, die noch aus technischen Gründen, z. B. aus der Harzsysteme oder Dispergierung vorhanden sind. Diese Lösemittel haben häufig einen negativen Einfluß auf die Beschichtungsbedingungen der Elektrotauchlackbäder. Eine Verminderung oder Entfernung dieser Anteile bewirkt ein verbessertes Konstanthalten der Parameter eines Elektrotauchbades.

Ein weiterer Vorteil im Vergleich mit der bisher bekannten Ultrafiltration von verbrauchten Elektrotauchbädern ergibt sich aus der Tatsache, daß durch die Ultrafiltration von Elektrotauchbädern auch Substanzen erfaßt werden, die aufgrund ihrer Löslichkeit und ihrer molekularen Größe die Membranen passieren können. Dabei werden auch zum Teil notwendige Ionen oder andere notwendige Bestandteile des Beschichtungsmaterials erfaßt und entfernt. Diese müssen dann nachdosiert werden. Wird jedoch erfindungsgemäß die Dispersion bzw. Suspension oder Emulsion und Lösung des wäßrigen Bindemittels oder einer Bindemittelmischung bereits beim Hersteller vor dem Zusatz zum Elektrotauchbad der erfindungsgemäßen Behandlung unterzogen, so werden nur prinzipiell unerwünschte Bestandteile entfernt. Eine weitergehende Korrektur des fertigen Elektrotauchlack-Überzugsmittels ist dann nur in Ausnahmefällen notwendig.

Die folgenden Beispiele dienen zur Erläuterung der Erfindung. Prozentangaben beziehen sich auf das Gewicht.

Als Membran für die Dialyse der folgenden Versuche wurde ein NADIR-Dialyse-Schlauch der Fa. Kalle, Wiesbaden, verwendet, mit einer Ausschlußgrenze von ca. 100 000 g/mol (für Dextran).

## Bindemittelbeispiele:

### Beispiel 1 (KTL-Bindemittel):

2262 g Epoxidharz auf Basis Bisphenol A (Epoxid-Äquivalentgewicht ca. 260) werden 2023 g Diäthyl-engklykoldimethyläther bei 60° bis 70°C gelöst und nach Zugabe von 0,8 g Hydrochinon und 2453 g eines Halbesters aus Tetrahydrophthalsäureanhydrid und Hydroxyethylmethacrylat auf 100° bis 110°C erhitzt. Die Temperatur von 100 bis 110°C wird solange gehalten, bis die Säurezahl unter 3 mg KOH/g gesunken ist. Dann wird das Reaktionsprodukt mit 3262 g einer 70 % Lösung eines Monoisocyanats aus Toluylendiisocyanat und Dimethyläthanolamin (Molverhältnis 1:1) in Diäthylengklykoldimethyläther umgesetzt bis zum NCO-Wert von null.

### Beispiel 2 (KTL-Bindemittel):

Es werden 228 Teile Bisphenol A (1 Mol) mit 260 Teilen Diäthylaminopropylamin (2 Mol) und 66 Teilen Paraformaldehyd (91 %; 2 Mol) in Gegenwart von 131 Teilen Toluol als Azeotropschleppmittel bis zur Abtrennung von 42 Teilen Reaktionswasser umgesetzt. Nach Addition von 152 Teilen Diethylenglykoldimethylether und Kühlen des Produkts auf 30°C werden innerhalb von 45 min. 608 Teile (2 Mol) eines mit 2-Ethylhexanol halbblockierten Toluylendiisocyanats zugegeben. Nach Erreichen eines NCO-Wertes von null werden 1400 Teile dieser Lösung mit einer Lösung von 190 Teilen eines Epoxidharzes auf Basis von Bisphenol A (Epoxidäquivalentgewicht ca. 190) und 250 Teilen (1 Mol) eines Glycidylesters einer gesättig-ten tertiären $C_9$ bis $C_{11}$ Mono-carbonsäure in 389 Teilen Diethylenglykoldimethylether versetzt und bei 95° bis 100°C bis zu einem Epoxidwert von 0 umgesetzt. Das Produkt ist nach Zusatz von 40 Millimol Ameisensäure pro 100 g Festharz einwandfrei mit Wasser zu verdünnen.

### Beispiel 3 (KTL-Bindemittel):

Gemäß EP-B-12 463 werden 301 g Diäthanolamin, 189 g 3-(N,N-dimethylamino)-propylamin und 1147 g eines Adduktes aus 2 mol Hexandiamin-1,6 und 4 mol Glycidylester der Versaticsäure (Cadura E 10 von Shell) zu 5273 g Bisphenol A Epoxydharz (Epoxidäquivalentgewicht ca. 475) in 3000 g Ethoxypropanol gegeben. Das Reaktionsgemisch wird 4 Std. unter Rühren bei 85° bis 90°C und dann eine Stunde bei 120°C gehalten. Anschließend wird mit Ethoxypropanol auf einen Festkörper von 60 % verdünnt.

### Beispiel 4 (ATL-Bindemittel):

Es werden 654 g Neopentylglykol und 136 g Trimethylolpropan in einem 2-Liter Kolben mit Rührer und Kolonne aufgeschmolzen. Danach werden 271 g Isophthalsäure und 125 g Trimellithsäureanhydrid zugegeben. Unter Inertgas wird so auf 210°C geheizt, daß die Kolonnen-Kopftemperatur 102°C nicht überschreitet.

Bei einer Säurezahl von 12 mg KOH/g Harz wird auf 150°C gekühlt.

Anschließend wird ein Gemisch von 536 g Isodekanol und 778 g Trimellithsäureanhydrid zugegeben. Es wird auf 180°C geheizt und nach Erreichen einer Säurezahl von etwa 50 mit 2-Butanol auf einen Festkörper von 76 % verdünnt.

Dialysebeispiele:

Beispiel 5:

483 g eines Harzes nach Beispiel 1 mit eine Festkörpergehaltvon 56 % werden mit 9,0 g Essigsäure (100 %) gut vermischt und neutralisiert und mit 1760 g vollentsalztem Wasser auf ca. 12 % Festkörper verdünnt. 2 l dieses Klarlacks werden gegen 12 l vollentsalztem Wasser zwei Tage mit einer Membran dialysiert und dieser Vorgang mit neuem Wasser wiederholt. Dabei entsteht ein stabiler Lack mit geringer Neutralisation.

|  | vor | nach Dialyse |
|---|---|---|
| Leifähigkeit | 2310 | 200 μs/cm |
| pH | 6,1 | 5,6 |
| MEQ | 64 | 9 |
| MEQ = mmol Neutralisationsmittel pro 100 g Festkörper | | |

Beispiel 6:

629 g einer Dispersion (Festkörpergehalt 42 %) analog Beispiel 2 mit 1570 g vollentsalztem Wasser verdünnt. 2 l dieser Lösung werden zwei Tage gegen 12 l vollentsalztem Wasser mit einer entsprechenden Membran dialysiert. Nach Austausch des Wassers wird dieser Vorgang noch einmal wiederholt. Der entstehende Klarlack ist für mehr als 12 Wochen stabil und setzt nicht ab und zeichnet sich durch eine niedrige Leitfähigkeit und niedrigen Neutralisationsgrad aus.

|  | vor | nach Dialyse |
|---|---|---|
| Leitfähigkeit | 1280 | 190 μS/cm |
| pH | 5,6 | 6,4 |
| MEQ | 35 | 10 |

Beispiel 7:

820 g eines Harzes entsprechend Beispiel 3 mit einem Festkörpergehalt von 55 % werden 7,7 g Ameisensäure vermischt und neutralisiert und mit 1,7 l vollentsalztem Wasser verdünnt. Dieser Lack wird zwei Tage im Gegenstromprinzip mit vollentsalztem Wasser durch eine entsprechende Membran durchflossen und dialysiert. Die Wassermenge entspricht dabei ca. dem 10-20fachen der Lackmenge. Es entsteht ein konzentrierter, stabiler Klarlack.

EP 0 388 759 A1

|  | vor | nach Dialyse |
|---|---|---|
| Leitfähigkeit | 1160 | 150 µS/cm |
| pH | 5,1 | 5,3 |
| MEQ | 34 | 8 |

Ultrafiltrationsbeispiele:

Beispiel 8:

160 g eines Harzes nach Beispiel 4 werden mit 42,5 g Diisopropanolamin innig vermischt und mit 798 g Wasser in eine wäßrige Emulsion überführt. Diese wird gegen 5,5 l Wasser 2 Tage dialysiert und der Vorgang mit neuem vollentsalztem Wasser wiederholt. Es entsteht ein Klarlack mit etwas geringerem Festkörpergehalt.

|  | vor | nach Dialyse |
|---|---|---|
| Leitfähigkeit | 1260 | 350 µS/cm |
| pH | 9,2 | 8,5 |
| MEQ | 126 | 58 |

Beispiel 9:

500 g einer wäßrigen Dispersion mit einem Festkörpergehalt von 38 % wurden hergestellt aus Bindemittel nach Beispiel 2 und 3 im Verhältnis 80:20 % (Festkörper) gemischt, mit einer Neutralisation von 22 MEQ Essigsäure. Diese wird mit 0,9 g Essigsäure versetzt und mit 500 g vollentsalztem Wasser einen FK von ca. 19 % verdünnt. Von diesem Lack werden mit einer Ultrafiltrationseinrichtung sukzessive 200 % Ultrafiltrat entzogen und mit Wasser jeweils wieder aufgefüllt. Es entsteht dabei ein über mehrere Wochen stabiler Klarlack mit erniedrigter Neutralisation.

|  | vor | nach Ultrafiltration |
|---|---|---|
| Leitfähigkeit | 940 | 400 µS/cm |
| pH | 5,3 | 5,0 |
| MEQ | 25 | 12 |

Beispiel 10:

963 g (Festkörper 60 %) eines Harzes nach Beispiel 3 werden mit 23,5 g Milchsäure (80 %) neutralisiert und dann mit 765 g vollentsalztem Wasser verdünnt zu einem Klarlack. Diesem wird in einer Ultrafiltrationseinrichtung sukzessive 90 % Ultrafiltrat entzogen und laufend wieder mit Wasser aufgefüllt. Es entsteht dabei ein stabiler Klarlack.

|  | vor | nach Ultrafiltration |
|---|---|---|
| Leitfähigkeit | 1140 | 880 µS/cm |
| pH | 5,1 | 5,1 |
| MEQ | 36 | 30 |

Beispiel 11 (Elektrotauchlack):

Aus dem Harz gemäß Beispiel 1 und 3 wird im Verhältnis (Festkörper) 70:30 % eine Mischung hergestellt. 683 g davon werden mit 7,7 g Ameisensäure versetzt, vermischt und mit 1480 g vollentsalztem Wasser auf einen Festkörper von ca. 22 % verdünnt. Diese Dispersion wird gegen 0,8 l Wasser insgesamt fünfmal dialysiert.

2296 g des dialysierten Produkts (Festkörpergehalt 20 %) werden mit 258 g einer Pigmentpaste versetzt, die entsteht durch Mischen von 22 g eines üblichen Anreibebindemittels mit 11 g Butylgklykol, 1,2 g Milchsäure (60%), 45,2 g Wasser zu einer homogenen Lösung, Zufügen von 17,8 g Ruß, 29 g Titandioxyd, 72 g Kaolin und 59,8 g Wasser, Mischen und Vermahlen auf einer Perlmühle zu ausreichender Feinheit. Die Mischung wird mit 747 g vollentsalztem Wasser aufgefüllt.

Das Bad hat eine Leitfähigkeit von ca. 700 µS/cm, pH 5,3, MEQ 15 und ist stabil. Es kann wie übliche KTL-Lacke, z. B. durch Zusatz organischer Lösemittel zur Verbesserung der Abscheideparameter, korrigiert werden. Ein Bad aus der Harzmischung, die nicht der Dialyse unterworfen wurde, zeigt einen pH von 5,4, einen MEQ 30, eine Leitfähigkeit von 1200 µS/cm. Die Beschichtungsbedingungen (Abscheidetemperatur, Abscheidespannung) und der Umgriff des Lackes mit der gereinigten Bindemitteldispersion sind gegenüber dem normalen Bad ohne Dialyse deutlich günstiger.

**Ansprüche**

1. Verfahren zur Herstellung einer wäßrigen Bindemittelzusammensetzung für Elektrotauchlack-Überzugsmittel, durch Neutralisation eines oder mehrerer filmbildender Harze mit sauren oder basischen Gruppen, gegebenenfalls in Anwesenheit eines Vernetzers, mit einer Base oder Säure als Neutralisationsmittel, und Vermischen mit Wasser, **dadurch gekennzeichnet,** daß das Neutralisationsmittel in der zur Auflösung oder Dispergierung in Wasser erforderlichen Menge zu den Harzen oder deren Lösung in organischen Lösemitteln zugesetzt wird, das erhaltene neutralisierte Produkt in Wasser aufgelöst oder dispergiert wird und anschließend eine Ultrafiltration, Dialyse oder umgekehrte Osmose des erhaltenen wäßrigen Systems durchgeführt wird, bis ein Teil des Neutralisationsmittels entfernt ist.

2. Verfahren nach Anspruch 1, dadurch gekennzeichnet, daß die Ultrafiltration, Dialyse oder umgekehrte Osmose solange durchgeführt wird, bis 5 bis 90 Gew-% des zur Auflösung oder zum Dispergieren benötigten Neutralisationsmittels entfernt sind.

3. Verfahren nach Anspruch 1 oder 2, dadurch gekennzeichnet, daß ein oder mehrere für die kathodische Elektrotauchlackierung geeignete Harze mit Aminogruppen eingesetzt werden und Säure als Neutralisationsmittel verwendet wird.

4. Verfahren nach Anspruch 1 oder 2, dadurch gekennzeichnet, daß ein oder mehere für die anodische Elektrotauchlackierung geeignete Harze mit Säuregruppen eingesetzt werden und Base als Neutralisationsmittel verwendet wird.

5. Verfahren nach einem der vorhergehenden Ansprüche, dadurch gekennzeichnet, daß dem neutralisierten Harz bzw. den neutralisierten Harzen oder deren Lösung eine derartige Wassermenge zugegeben wird, daß der Festkörpergehalt des Gesamtsystems bei 10 bis 50 Gew-% liegt.

6. Verfahren nach einem der vorhergehenden Ansprüche, dadurch gekennzeichnet, daß der wäßrigen Bindemittelzusammensetzung nach der Entfernung eines Teils des Neutralisationsmittels übliche Zusätze zur Herstellung eines wäßrigen Elektrotauchlack-Überzugsmittels zugesetzt werden.

7. Wäßrige Bindemittelzusammensetzung für Elektrotauchlack-Überzugsmittel mit geringem Gehalt an Neutralisationsmittel, erhältlich nach den Verfahren eines der Ansprüche 1 bis 6.

8. Wäßrige Bindemittelzusammensetzung für Elektrotauchlack-Überzugsmittel nach Anspruch 7 mit einem Neutralisationsmittelgehalt, der 10 bis 90 % des zur Auflösung oder Dispergierung benötigten Neutralisationsmittels entspricht.

9. Elektrotauchlack-Überzugsmittel enthaltend eine wäßrige Bindemittelzusammensetzung nach einem der Ansprüche 7 oder 8.

10. Verwendung der wäßrigen Bindemittelzusammensetzungen nach Anspruch 7 oder 8 oder erhältlich nach einem der Ansprüche 1 bis 6, zur Herstellung von Elektrotauchlack-Überzugsmitteln.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 663 405 (R.M. CHRISTENSON) <br> * Anspruch 1; Spalte 2, Zeilen 37-51 * <br> --- | 1 | C 09 D 5/44 <br> C 25 D 13/22 |
| A | EP-A-0 271 015 (BASF) <br> ----- | | |

RECHERCHIERTE SACHGEBIETE (Int. Cl.5)

C 09 D
C 25 D

Der vorliegende Recherchenbericht wurde für alle Patentansprüche erstellt

| Recherchenort | Abschlußdatum der Recherche | Prüfer |
|---|---|---|
| DEN HAAG | 28-06-1990 | BUSCAGLIONE Y. |